(19) **Europäisches Patentamt**

**European Patent Office**

**Office européen des brevets**

(11) **EP 1 296 568 B1**

(12) **EUROPEAN PATENT SPECIFICATION**

(45) Date of publication and mention
of the grant of the patent:
**26.04.2006 Bulletin 2006/17**

(51) Int Cl.:
*A23L 1/164* (2006.01)    *A23L 1/217* (2006.01)

(21) Application number: **01935133.7**

(22) Date of filing: **08.05.2001**

(86) International application number:
**PCT/US2001/014744**

(87) International publication number:
**WO 2001/084956 (15.11.2001 Gazette 2001/46)**

(54) **AN ERGONOMIC SNACK PIECE HAVING IMPROVED DIP CONTAINMENT**

ERGONOMISCHES SNACKPRODUKT MIT VERBESSERTEM SAUCE-ZURÜCKHALTEN

AMUSE-GUEULE ERGONOMIQUE AVEC CAPACITE DE RETENTION AMELIORE

(84) Designated Contracting States:
**AT BE CH CY DE DK ES FI FR GB GR IE IT LI LU MC NL PT SE TR**

(30) Priority: **08.05.2000 US 202719 P**

(43) Date of publication of application:
**02.04.2003 Bulletin 2003/14**

(73) Proprietor: **THE PROCTER & GAMBLE COMPANY Cincinnati, Ohio 45202 (US)**

(72) Inventors:
• **ZIMMERMAN, Stephen, Paul Wyoming, OH 45215 (US)**
• **ROMANACH, Benito, Alberto Mason, OH 45040 (US)**
• **TERAS, Lee, Michael Cincinnati, OH 45239 (US)**
• **JONES, Charles, Edward Jackson, TN 38305 (US)**

• **HERRING, John, Russell Jackson, TN 38305 (US)**

(74) Representative: **Peet, Jillian Wendy et al Patent Department Procter & Gamble Technical Centres Limited Whitley Road Longbenton Newcastle Upon Tyne, NE12 9TS (GB)**

(56) References cited:
WO-A-00/75057          WO-A-01/56392
DE-U- 9 107 109        DE-U- 9 110 910
GB-A- 1 321 889        GB-A- 2 311 203
JP-A- 5 227 890        US-A- 4 279 932
US-A- 5 128 157

• **DATABASE WPI Section Ch, Week 199111 Derwent Publications Ltd., London, GB; Class D13, AN 1991-076849 XP002184703 -& JP 03 022950 A (YG MATSUBE), 31 January 1991 (1991-01-31)**

## Description

The present invention relates to ergonomic chip snack pieces having improved hand held characteristics and dip containment. More particularly, the present invention relates to triangular chip snack pieces having a dip containment well and a grip region that provides improved dip-condiment retention while simultaneously providing the user several areas to hold the chip and thus avoiding messy finger contact with the dip.

Snack chips and snack dip-condiments, such as "chip dips" or "salsas", are a very popular snack combination. However, dip-condiments or fluid portions of such dips used for topical application to snack pieces can create a very messy eating experience for consumers. One of the problems with the many chip-type snack foods on the market today is that the chips do not hold or contain the dip-condiment after it has been "scooped" onto the chip, especially the fluid portions of the dip. Most snack pieces lack any region on the snack piece surface that can contain any substantial amount of dip-condiment.

Randomly formed snack pieces create another problem when using snack pieces for dipping. The problem is that there is little to no uniformity or consistency in the size and shape of these snack pieces, let alone in providing a consistent or uniform volume of containment for the dip-condiment. The shapes often have flat surfaces or alternating curved surfaces that promote the ready flow of dipped materials. The size of the snack pieces may be too small to be easily held. Each surface of the snack piece has curvatures such that low viscosity dip-condiments will flow freely. As dip is placed on the snack pieces having no containment well, the dip, or at least the fluid portion of the dip, can flow off of the snack piece's surface, thus causing the user to tilt the chip to try and prevent the dip from flowing off the chip. The tilting of the chip causes the user to hold the chip in awkward positions and is typically not very ergonomic or comfortable. Additionally, when the snack piece is tilted, the fluid portion still can flow readily over the edge of the snack piece often landing undesirably on clothing or household furnishings. Thus, the randomly formed snack pieces, especially corn and tortilla chips, are not conducive to dipping.

Additionally, the chips that do have some sort of dip containment region are not ergonomically advantageous due to the simultaneous location of the dip containment and gripping regions. In other words, these snack pieces have very little gripping surface area. A messy eating experience involving finger contact with the dip inherently follows when the snack piece lacks a gripping region that is distinguishable from the dip containment region. Factors contributing to lower gripping ergonomics are limited sizes that are too small to comfortably hold, integration of the dip holding and grip regions, vertical side walls along the containment region that promote a less natural grip (more awkward grip) and dipping motion, and combinations of all of these features within the same snack piece. Thus, these snack pieces make it more difficult for the consumer to grab and maneuver the chip from dipping to placement in one's mouth. The tradeoff between satisfying the desire for increased dip consumption with good dip containment with any easy to hold snack piece still exists.

Another problem that is experienced is the frustration and messy fingers upon breakage of a chip while engaging a dip. This can happen especially for snack shapes that have to be tilted considerably from the orientation of maximum containment volume. This is referred to and defined later as possessing a large engagement angle for an entry point of dip to the interior chip surface, or point in the edge of the shape, as also defined later. When this engagement angle is large, the vertical height of the resulting shape orientation can also be large. A large height is not able to distribute well the force that a consumer imparts on the snack shape upon engaging a dip and can result in a large torque that eventually can lead to premature breakage of the snack. One can compensate by making the snacks stronger or thicker, but this can lead to non-preferred textures that could be dense or tooth packing. It would be desirable, therefore, to design snack shapes with engagement angles that provide for comfort while engaging a dip, and that also provide for a proper distribution of the force imparted by the consumer so to prevent breakage even for snacks provided with a thin, light and crispy textures that are preferred by consumers. It will be further preferred that the shapes be consistent among snack pieces sold as a group, to provide for predictability.

For example, there are some extruded corn chips that have sizeable dip containment regions but due to the random formation of these chips the chips typically have either very small or no regions to grip the chip beyond the dip containment well. Also, these snack pieces are randomly formed and thus irregular and non-uniform sizes and shapes.

Further, a bowl-shaped tortilla chip is available, but again, it has no area for gripping that is beyond the dip containment well. These chips do not allow easy access to the total volume available to retain the dip because the user must use some of this volume to accommodate the user's fingers to grip the chip. If the user maximizes the volume of the containment well available to hold dip, the user must uncomfortably grab the chip on its edge or stick their fingers in the dip contained on the chip. Thus to comfortably grip the chip, the user must sacrifice dip containment volume to accommodate the user's fingers. Additionally, the lack of gripping area can create an unnecessary mess on the consumer's hand or unintentional dropping of the snack piece.

At least one chip includes a handle beyond the dip well but it forces the user to approach and grab the chip in one place and orientation. It would be more convenient if the use had more than one region to grip the chip such that the user could grip it in multiple regions or from multiple orientations. Also, this chip has vertical or substantially vertical side walls forming the dip containment well. This makes the dipping of the chip into the dip-condiment less ergonomic for the user. For example, when the user grips one end of the chip and tilts it downward to scoop dip into the well, the user must rotate their hand substantially such that the dip can pass over the wall of the dip containment well.

JP-A-03022950 discloses shaped dough pieces which are used as crusts for covering a filling material. GB-A-2311203 relates to edible containers and utensils made from scrap bread crust material and which may be used as a base or container for filling materials. DE-U-9107109 relates to a food product in the shape of a ship's hull which can be filled or topped with meat, sausage, fish, etc. US-A-4279932 is a dehydrated food material which can be reconstituted into a different shape on treatment with hot water. DE-U-9110910 relates to a food product in the shape of a painter's palette with cavities for holding food substances and condiments. US-A-5128157 relates to bowls or shells composed of edible materials and which can be used as serving bowls to hold food during consumption of a meal. GB-A-1321889 relates to a puffed scooped-shaped snack product made from an extruded ribbon-like strip of dough that is folded and crimped at intervals along the centre-line of the strip and then severed to produce half products having a scoop-like portion and a folded finger grip portion. JP-A-05227890 relates to chip-type snack foods made by pressing a wafer into various three-dimensional shapes.

It would be desirable to have a snack piece having an ergonomic design for improved hand held characteristics and dip containment and a method to make such a snack piece. It would also be desirable to have a snack piece having a dip containment well and a grip region and a method to make such a snack piece. It would be desirable to have a snack piece having a dip containment well wherein the angle of the dip containment wall is optimized to provide improved dipping ability and ergonomically dipping. It would be desirable to have a snack piece designed such that it requires minimal attention by a user to handle it during the dipping and eating experience.

The present invention relates to an ergonomically-shaped concave-curved potato or corn chip snack piece provided with improved containment of topical dip-condiments on the surface of the snack piece and easy gripping. The snack piece includes a containment well to hold dip-condiments and a grip region and is a section from a sphere cap having a radius of curvature of from 5mm to 500mm. The grip region is adjacent to the containment well. The snack piece has a projected area of from 1750 mm$^2$ to 3500 mm$^2$ and dip improvement ratio from 0.3 mm to 6 mm whereby the grip region provides the user an area to grab the snack piece without having to place fingers in the dip containment well.

The chip may be placed in a nested arrangement of snack pieces aligned along a single one-dimensional nesting axis that runs perpendicularly through the face of each snack piece. The grip region preferably includes at least one dry entry point at a distance from the containment well of at least 5 mm. The at least one dry entry point preferably has an engagement angle from 1° to 120° whereby a user of the snack piece can grab the grip region outside the containment well and cause the snack piece to engage the dip at an advantageous angle such that the dip enters the containment well. The snack piece preferably includes at least one dry or wet entry point on a peripheral edge of the snack piece having an engagement angle of less than 40°, whereby the snack piece engages the dip at an advantageous angle such that the dip enters the containment well.

While the specification concludes with claims particularly pointing out and distinctly claiming the present invention, it is believed that the present invention will be better understood from the following description in conjunction with the accompanying. Drawing Figures, in which like reference numerals identify like elements, and wherein:

Figure 1 is a perspective view of a sphere cap, as shown by shaded region, cut from a modeled sphere shown for exemplary purposes to aid in explanation of the design of the preferred embodiment of the present invention;

Figure 2 is a perspective view of the preferred embodiment of the snack piece of the present invention;

Figure 3 is a planar top view of the snack piece shown in Figure 2;

Figure 4 is a cross sectional view of the snack piece shown in Figure 2;

Figure 5 is a cross sectional view of a snack piece shown in Figure 2 showing lowest point B and lowest entry point $E_1$;

Figure 6a is a perspective view of the snack piece shown in Figure 2 illustrating the snack piece in its maximum volume reference orientation;

Figure 6b is a perspective view of the snack piece shown in Figure 2 illustrating the snack piece oriented in a certain direction and tilt from its reference orientation;

Figure 7 is a perspective view of the snack piece shown in Figure 2 representing the theoretical "flattening" of the snack piece from its three-dimensional state to its two-dimensional state;

Figure 8 is a top planar view of the snack piece shown in Figure 2 in the "flattened", two-dimensional state illustrating the containment well location for a certain snack piece orientation from the reference orientation;

Figure 9 is a top planar view of the snack piece shown in Figure 2 in the "flattened", two-dimensional state illustrating the containment well location when the snack piece is in its reference orientation;

Figure 10a is a specific line, resulting from the intersection of the snack piece's general curvature and an imaginary vertical plane that includes both the $B_{ref}$ point and a given entry point for the snack piece shown in Figure 2, used to measure the engagement angle;

Figure 10b is an enlarged view of the line shown in Figure 10a;

Figure 11 is specific line resulting from the intersection of the snack piece's general curvature and an imaginary vertical plane that includes both the $B_{ref}$ point and a given entry point for an alternative embodiment of the snack piece of the present invention;

Figure 12 is a top planar view of the snack piece shown in Figure 2 in its "flattened" two-dimensional state;

Figure 13 is a top planar view of the snack piece shown in Figure 2 showing the entry points along the chips peripheral edge;

Figure 14a is a specific line, resulting from the intersection of the snack piece's general curvature and an imaginary vertical plane that includes both the entry point (A) and a opposite entry point (C) for the snack piece shown in Figure 2, used to measure the hold angle;

Figure 14b is a specific line, resulting from the intersection of the snack piece's general curvature and an imaginary vertical plane that includes both the entry point (A) and a opposite entry point (C) for a snack piece having a negative hold angle;

Figure 15 is a perspective view of another further embodiment of the snack piece of the present invention;

Figure 16 is a top planar view of the snack piece shown in Figure 14;

Figure 17 is a perspective view of another further embodiment of the snack piece of the present invention;

Figure 18 is a top planar view of the snack piece shown in Figure 17;

Figure 19 is a side elevational view of the snack piece shown in Figure 17; and

Figure 20 is a perspective view of a nested arrangement of a plurality of the snack pieces as shown in Figure 2.

The present development is an ergonomic potato or corn chip snack food piece that is designed to provide improved hand held and dipping characteristics and to include a containment region or well that can hold and contain topical dip-condiments. The snack piece's ergonomics may be controlled by optimizing an engagement angle of the snack piece toward the dip. To further improve the dipping and ergonomic characteristics of the snack piece, the snack piece can be formed to create an improved hold angle for the snack piece allowing for better handling and maneuvering during the dipping and eating experience. The snack piece also includes a grip region located beyond the dip containment well. This ergonomically designed chip having a containment well can contain the dip-condiment within the boundaries of the snack piece's outer edges and still provide the user ample area to grip the snack piece. The grip region or regions, i.e., a handle, provide the user an area on the snack piece to conveniently grip and maneuver the snack piece without mess. These topical dip-condiments (hereinafter referred to as "dips") can include, but are not limited to, water or oil based, salsa, dairy based spreads such as cheeses or sour cream, vegetable and or meat containing dips. This is especially important with highly fluid or flowable dips, such as salsa, which can flow at even slight angles of inclination.

The amount of dip containment volume and ready access to dry gripping regions that enable a cleaner eating experience are design features that are beneficial to a user. Further focus on very specific design aspects such as where dip enters the snack piece herein defined as the entry point, the angle at which the chip contacts the dip herein defined as the engagement angle, and the angle characterizing the gripping region, governing the hand held comfort of the snack piece herein defined as the hold angle provides a basis for dramatic improvement to the functionality of the snack piece. A ready means for balancing the competing design needs for an optimized snack piece intended for dipping has not existed. For example, it would be desirable to provide a chip with increased dip containment volume vs. current snacks and ample finger size gripping regions while also making it bite size. Historically, snack design has been an iterative, empirical approach with a large degree of trial and error experimentation. The present invention provides improved design of dipping chips based upon a mathematical model that provides a predictive basis for specifying critical size and shape characteristics. Surprisingly, it is possible to provide s chip with greatly improved consumer utility.

Chip shapes that more readily form containment wells are formed herein by taking a section from a sphere cap having a radius of curvature of from 5 mm to 500 mm, preferably from 10 mm to 150 mm, more preferably from 10 mm to 90 mm, and yet more preferably from 15 mm to 65 mm, most preferably from 45 mm to 55 mm.

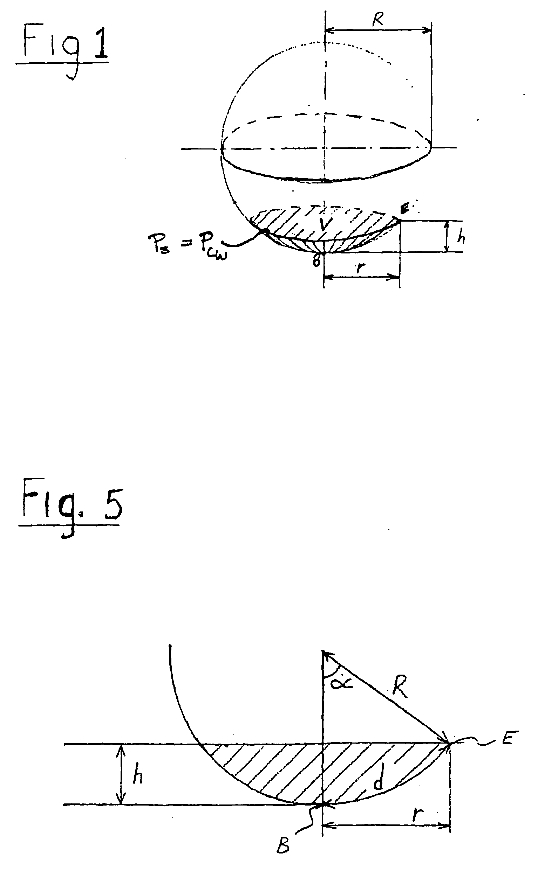

Figure 1, for example, shows a sphere, which has been modeled, and then a sphere cap or segment has been cut from that sphere as shown in by the shaded region. When this sphere cap is cut from the sphere, it can then be formed or cut into any two-dimensional shape, such as a triangle, forming a two-dimensional shape having a three-dimensional curvature. In the preferred embodiment, the chip is a triangular-shaped sphere cap. This will be explained more fully later in the application using the preferred embodiment to exemplify the invention. Any number of two-dimensional cross sectional shapes can be cut from the source three-dimensional shape to form a variety of interesting snack shapes. These two-dimensional shapes include but are not limited to circles, ovals, ellipses, parabolas, parallelograms, trapezoids, rectangles, squares, polygons, or triangles or sections of any combination of the above.

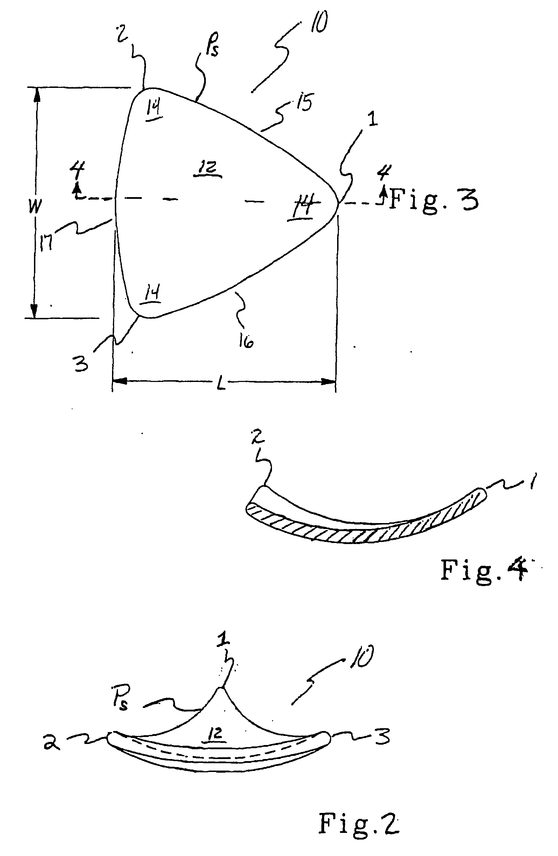

Referring to Figures 2 to 4, a preferred embodiment of the chip (10) is shown. Chip (10) includes a containment well (12) that contains the dip on a top surface of the chip, a grip region (14) that is beyond, and preferably above, the containment well (12) and a peripheral edge ($P_s$) of the chip shape. The containment well (12) prevents the dip from flowing over the chip's peripheral edge ($P_s$) in all linear directions when in an equilibrium state. Containment well (12) is preferably bowl-shaped or concave-curved. Also, the chip can have more than one grip region (14), preferably three grip regions (14). The grip region (14) is of sufficient size to enable comfortable finger placement. The overall size, shape and curvature of the chip provides the capability for hand held control, improved dip holding capacity and dipping motion. Chip (10) is preferably a uniform chip wherein each chip that is produced is of substantially the same size, shape and dimension. The peripheral edge ($P_s$) forms the outer edge of the chip and defines the two-dimensional shape of the chip. Additionally, the containment well (12) may have a perimeter ($P_{cw}$) that is defined by the containment volume of the containment well (12). Since the containment well (12) may be formed by a smooth curvature of the chip, such as a sphere cap, there may not be any noticeable edge separating the containment well (12) from the grip regions (14).

The hypothetical sphere has a radius of curvature from 35 mm to 90mm, preferably from 45 mm to 65mm and most preferably from 50 mm to 55 mm. A three-dimensional, triangular-shaped sphere segment is cut from the sphere segment shaded in Figure 1 to form the preferred chip of the present invention. The triangular shape is the most preferred shape for a dipping chip since it is ergonomically easier to grasp at any of three vertices (1, 2, 3) of the triangular shape and provides multiple entry points for dip to be "scooped" onto the chip and into the containment well (12).

Length (L) of the chip at it longest location is greater than 15 mm, preferably greater than 30mm, and most preferably greater than 40mm and width (W) of the chip at it widest location is greater than 15 mm, preferably greater than 30mm, and most preferably greater than 40mm. The aspect ratio of the width divided by the length is greater than 0.50, preferably greater than 0.60, more preferably greater than 0.70, and most preferably greater than 0.75. As shown in Figure 2, the preferred embodiment has a length (L) from 40 mm to 110 mm, preferably from 50 mm to 80 mm, and most preferably from 60 mm to 65 mm and a width (W) from 30 mm to 110 mm, preferably from 40 mm to 80 mm, and most preferably from 50 mm to 60 mm. Sides (15, 16) of the triangle have lengths from 40 mm to 80 mm, preferably between 50 mm to 75 mm and most preferably from 60 to 70 mm and side (17) has a length from 30 to 75 mm, more preferably from 40 mm to 70 mm and most preferably from 50 mm to 60 mm.

The chip of the present invention will have a certain orientation or position that when it is held or placed in that orientation the containment well (12) will contain the maximum volume of dip. The theoretical volume of the containment well (12) for any orientation, including the maximum theoretical volume, can be calculated. This containment volume, as used herein, is defined as the theoretical volume enclosed by two surfaces. The first surface is the inner surface of the containment well (12) and the second surface is defined by an imaginary horizontal plane that intersects the three-dimensional cap at the perimeter ($P_{cw}$) of the containment well (12) such that the volume is fully contained between these two surfaces such that the volume is maximized. For example, the imaginary horizontal plane would lie across the top peripheral edge ($P_s$) of the sphere segment shaded in Figure 1. The containment well (12) has a point (B) located at the lowest point along an inner surface of containment well (12).

It must be noted that small holes or cracks in the shape, whether accidental or intended, do not vary the scope of the invention and should be discounted in the determination of the theoretical volume. Certain dips could be mounded actually higher than the peripheral edge ($P_a$) of the chip without spilling over this edge of the chip depending upon the dips' surface tensions, viscosities and yield points. This theoretical volume eliminates the differences in volume capacity due to the differing surface tensions, viscosities and yield points of the dips, since certain dips could be mounded actually higher than the peripheral edge of the containment well (12) without spilling over this edge due to these properties.

Also, the chip orientation that provides the maximum containment well volume will be used as the reference orientation. It is helpful to define a reference orientation because for certain two-dimensional shapes the volume of the resulting containment well (12) will change as the chip is tilted in different directions. Note that this maximum volume orientation may or may not coincide with the shape orientation that results upon resting the chip on a solid horizontal surface and letting the shape acquire its most stable state of least potential energy. In addition, the chip includes entry points (E), which are regarded as being on the peripheral edge ($P_s$) of the chip wherein the dip may enter onto the surface and into the containment well (12) at these entry points. Users may have different preferred entry points (E) along the edge of a specific shape. However, any point along the peripheral edge ($P_s$) will be considered as a possible entry point (E).

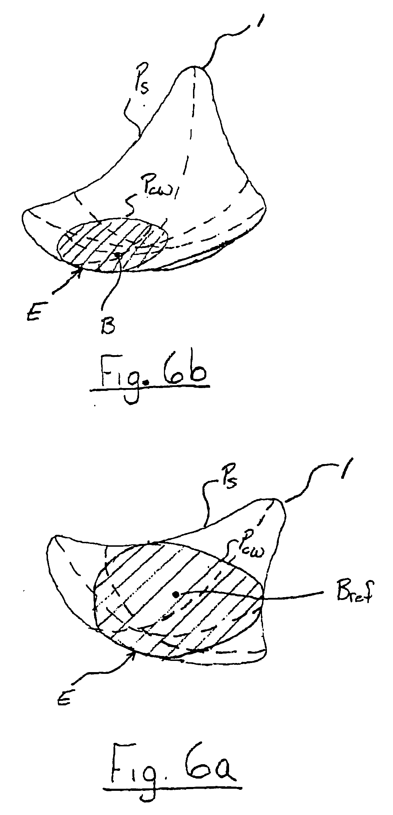

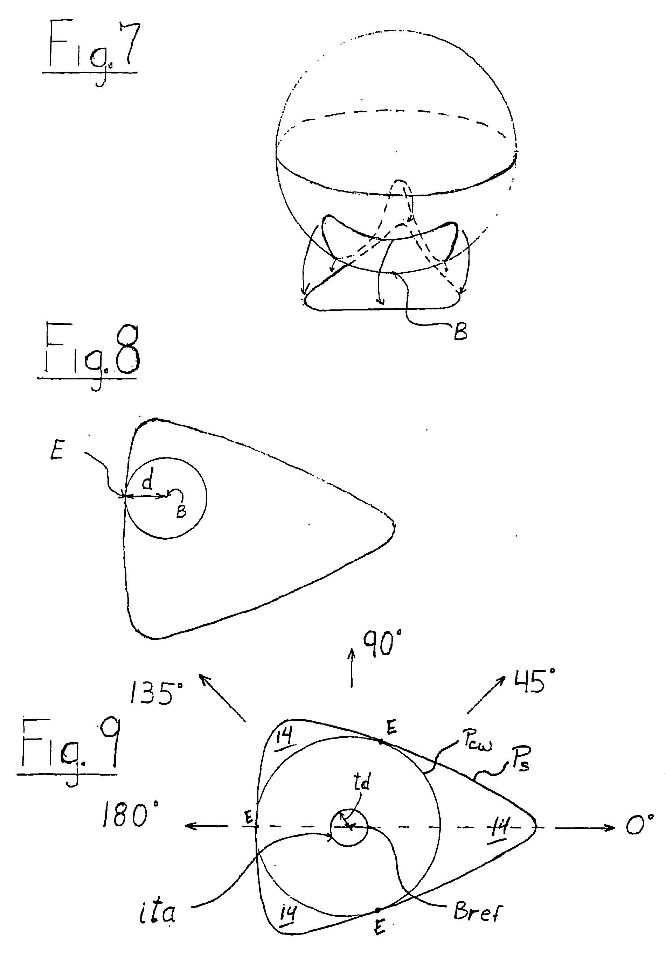

Referring to Figures 5, 6a and 6b, the lowest entry point ($E_1$) along the perimeter ($P_{cw}$) of the containment well (12) determines the theoretical volume of containment well (12). The vertical distance between the lowest point (B) and the lowest entry point ($E_1$) equals the height (h) of the containment well (12). The volume of containment well (12) is dependent upon the height (h) of the lowest entry point ($E_1$) and a distance (d) that the lowest point (B) is from this lowest entry point ($E_1$) of peripheral edge ($P_s$) as shown in Figure 5. The dip contained within the well (12), if higher than the lowest entry point ($E_1$), will theoretically flow out of well (12) at this lowest point until the dip reaches an equilibrium state. At which point, the dip will stay within the region defined as the containment well (12) unless the chip is tilted out of the orientation. The height (h) of lowest entry point ($E_1$) varies depending upon several factors such as the shape of the three-dimensional source shape and the two-dimensional shape cut from the cap segment of this source shape.

For example, the sphere segment shaded in Figure 1 is in its maximum volume orientation, and thus the height (h) of the lowest entry point ($E_1$) is equal everywhere along the perimeter ($P_{cw}$) of the sphere segment. However, as the chip is tilted, the height (h) is no longer an equal distance along the peripheral edge ($P_s$) because the lowest point (B) of the containment well (12) has shifted, causing the theoretical volume to change. The shifting of the lowest point (B) and the containment well (12) due to the tilting of the chip also causes the volume to change in the chips of the present invention. For exemplary purposes, figure 6a shows the chip in its reference orientation, wherein the containment well (12) has its maximum theoretical volume and the corresponding location of both the containment well and its corresponding lowest point (B). Figure 6b shows, for example, that upon orienting the chip in a certain direction and tilt, the containment well (12) and its corresponding lowest point (B) shifts to a different location on the chip.

Referring back to Figure 1, the containment volume of the containment well (12) of any shape cut from a sphere segment at any angle of tilt and direction can be described as a spherical segment of one base, whose volume is given by

$$Volume = \frac{\pi h(3r^2 + h^2)}{6}$$

where h is the height of the segment and r is the radius of the shaded segment base. The segment of one base can be seen shaded in the same Figure 1. This consistent way of describing the volume is what simplifies calculations in the case of the sphere-based shapes.

Still referring to Figure 5, to calculate the volume at any angle of tilt and any direction, the parameters h and r must first be defined. This can be accomplished by defining first the distance, d, of the shortest line segment that follows the contour of the sphere that defines the inner surface of the containment well (12), from the lowest point (B) at the given orientation to the lowest entry point ($E_1$) in the peripheral edge ($P_s$) of the chip. This entry point ($E_1$) along the peripheral edge ($P_s$) is where excess volume would "overflow" from the shape at the given shape orientation. There may be more than one lowest

entry point ($E_1$) on the perimeter ($P_{cw}$), contiguous or otherwise, where the volume would "overflow" without changing the scope of the present invention. In many cases, these lowest entry points will be the ones contained within the peripheral edges ($P_s$) and the perimeter ($P_{cw}$). This distance d defines both h and r for a given radius R of the sphere that describes the shape in question. The following mathematical expressions define the parameters,

$$\alpha = \frac{d}{R}$$

$$r = R \cdot \sin \alpha$$

$$R - h = R \cdot \cos \alpha \Rightarrow h = R(1 - \cos \alpha)$$

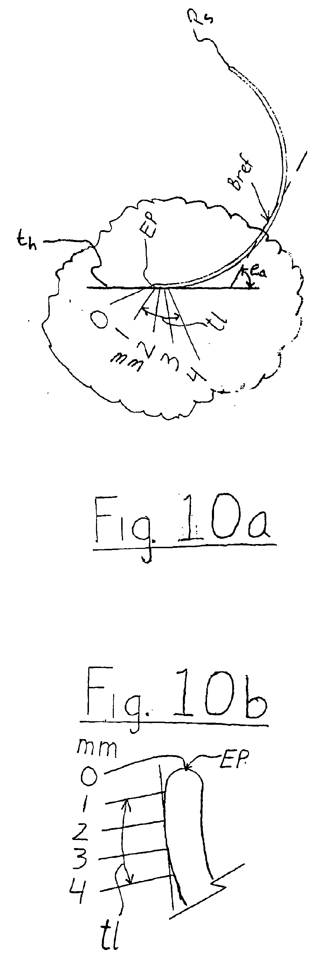

Determination of the containment volume can be accomplished analogously by taking the three-dimensional spherical segment and "unwrapping" or "flattening" the cap segment into its two dimensional shape or the horizontal plane as shown in Figure 7 such that the distance (d) can be more easily determined. Note that the "unwrapping" of the three-dimensional cap segment is different than projecting the shape vertically down onto the plane since projection does not take into account the curvature of the shape. Thus, in the preferred embodiment the three-dimensional, triangular-shaped sphere cap chip would become a two-dimensional, triangular chip. This method simplifies the calculation of distance (d). This distance (d) is still the shortest distance from the lowest point (B) to the lowest point ($E_1$) along the perimeter ($P_s$) in this "unwrapped" or two-dimensional state for calculation purposes.

This "flattening" of the shaped cap or segment into a single plane, i.e., horizontal, can be accomplished by locating each point along the peripheral edge ($P_s$) of the shaped cap segment in the horizontal plane at the same distance and direction from the lowest point (B) as they would be in the "wrapped" position or three-dimensional state. Figure 8 shows how the distance (d) can now be represented by the radius of the largest circle centered at point (B) that fits within the peripheral edge ($P_s$). This is true for any orientation of the chip and thus any position of the lowest point (B) along the inner surface of the containment well (12). The point (B) represents the point where the sphere "rests" and the bottommost point for the three-dimensional shape.

It would be of further benefit to optimize the chips dip holding capacity at varying angles of tilt. During the dipping and eating process, it is expected that the user will hold the chip at varying angles. The highest probability of spilling dip would be expected during tilting of the chip, hence, an additional reason for designing a chip size and shape that has robust dip holding characteristics throughout a range of angular positions. The volume control model can be expanded to define optimum chip design versus tilt angle by defining a new frame of reference for the tilted chip. The distance between the lowest part of the chip (B) and the lowest entry point ($E_L$) along the peripheral edge ($P_s$) changes dependent upon the angle of tilt. Thus, the volume of the dip containment region changes.

Following the described methodology, the lowest point (B) of the reference orientation can now be located as the center of the largest circle that can be inscribed within the peripheral edge ($P_s$) of the chip's shape, since that will provide the largest distance d, and, therefore, the largest volume. This point will be referred to as ($B_{ref}$). For a shape that has a containment well (12) having a flat bottom or a bottom that converges to a line with multiple points (B), the lowest point ($B_{ref}$) of this shape will either be one of these points located the closest or at the geometric center or all those points in the line or surface. (Figure 9 shows this point ($B_{ref}$) within an "unwrapped", preferred embodiment of this invention. We can now move radially from point ($B_{ref}$) within the horizontal plane, and locate multiple points B that represent the bottommost points of respective shape orientations that have been tilted from the reference orientation in a specific direction. For example, a tilt of 5° (or 0.087 radians) would correspond to a point B that is a tilt-distance (td) away from point ($B_{ref}$), equal to

$$td = R \cdot 0.087 rad$$

This distance (td) describes a circle in the horizontal plane around the point ($B_{ref}$) wherein the point (B) can be located depending on the direction of the tilt. Figure 9 shows a circle around the point ($B_{ref}$), representing locations of iso-tilt-angle. Any point within the circular line (ita) is at the same angle of tilt. From a point B within the iso-tilt-angle circular line (ita) a distance d between the circumference of (ita) and an entry point along the peripheral edge can now be calculated per algorithms set forth above. Based upon this calculation, the parameters h and r are calculated, which define the volume of the sphere segment of one base. Figure 9 also shows exemplary directions of tilt as angles from a chosen reference direction of 0°. How to choose this reference direction is not especially critical of this invention. One should choose a reference direction that enables analysis of the shape features.

Performing volume calculations for multiple (B) points over an iso-tilt line, each point being distinct in its direction of tilt, and doing so for multiple iso-tilt lines, one can map out the volume capacity performance upon tilting of a specific shape. Thus the effects of a multitude of chip size and shapes on dipping containment can be rapidly screened. Preferred size and shape combinations that yield sizeable dip containment over a robust range of angles expected during the eating experience can be readily determined. For example, the model algorithms can be used to specify the radius of curvature of the governing geometry such as a sphere, the radius and height of the cap section, and the selection of two dimensional shapes for the cap section that provide the maximum distance between the lowest entry point and the bottom of the chip. The volume capacity performance for a preferred embodiment of this invention shows a large holding capacity of 2,400 mm³ for the reference orientation. Also upon tilting in any direction with a tilt angle of 5°, retaining at least 1,000 mm³ or 41% of the maximum capacity, and retaining that level even upon tilting up to 12.5° in the 0° direction per Figure 9.

As previously mentioned, the surface tension of liquids like water as in salsa dips, will increase the practical holding capacity over and beyond the theoretical containment volume. Surface tension, yield point and viscosity of the dip or liquid contained can hold liquid together approximately about 2 mm to about 3 mm over the theoretical overflow point. Therefore, the containment volume of the preferred embodiment while in the reference orientation will practically increase about 2,500 mm³ to about 3,800 mm³, resulting in the containment volume increasing from about 2,400 mm³ to about 4,900 mm³ to about 6,200 mm³. In the case of the 5° tilt angle, the 1,000 mm³ volume will practically increase by about 1,600 mm³ to about 2,400 mm³, resulting in a containment practical volume from about 2,600 mm³ to about 3,400 mm³.

As illustrated in Figures 9, the chip of the present invention has grip regions (14) located beyond the perimeter ($P_{cw}$) of the containment well (12) whereas the sphere segment of Figure 1 does not have grip regions (14) beyond the perimeter ($P_{cw}$). Thus, the chip of the present invention permits the user to avoid a messy eating experience involving finger contact with the dip and allows the user to maximize the volume of containment well (12).

## Ergonomic Features

The preferred embodiment of this invention comprises advantageous features that are more ergonomically desirable towards the utility of the volume containment than other snack's shapes that provide volume containment utility. These features are related to the engagement angle, as in engaging a dip, versus the reference orientation, and the hold angle of the average tangential line of the outer surface of the grip region (14) versus a horizontal plane while on the engagement orientation for a given entry point. A specific range for these angles provides for the most satisfactory and ergonomic dipping experience. These will become clear from the explanation that follows in the paragraphs set forth below.

Engagement Angle

Referring to Figure 10 a, to describe the engagement angle it is necessary to choose an entry point and define an engagement orientation for that entry point. The entry point (E) for a specific horizontal direction emanating from the lowest point $B_{ref}$ of the reference orientation is defined herein as the point that is farthest distance away from the point ($B_{ref}$) and on the peripheral edge ($P_s$) of the chip. This distance is measured by following the general curvature of the shape of the chip in its reference orientation in the specific direction chosen along a vertical plane that includes both the point ($B_{ref}$) and the given entry point. This point is regarded as being in the peripheral edge of the shape for that direction. Since there is infinity of directions that emanate from the point ($B_{ref}$), there is also infinity of entry points, all of which define the peripheral edge of the shape. Users may have different preferred entry points along the peripheral edge of a specific shape. Any point in the edge will be considered as a possible entry point.

The engagement orientation for a shape and a given entry point (E) of that shape, as used herein, is defined as the orientation that places the given entry point (E) along an imaginary horizontal plane in such a way that a tangent to a specific line is parallel to that horizontal plane. The specific line results from the intersection of the generally smooth curvature of the outer surface of the containment well from the entry point toward $B_{ref}$, and a vertical plane that includes both entry point (E) and $B_{ref}$. Further, the engagement orientation of the chip places $B_{ref}$ at its highest point above the horizontal plane. The entry point tangent is arrived at by moving the tangent from ($B_{ref}$) at the reference orientation, which should be parallel to the horizontal plane, to the given entry point (E) at the engagement orientation within the vertical plane that includes both points. If the specific line has to be moved to arrive at the engagement orientation, this specific line must also be moved within the imaginary vertical plane. The resulting total angular movement of the tangent from $B_{ref}$ to the entry point (E) defines the engagement angle ($E_a$) for that given entry point (E) as shown in Figure 10a. The engagement angle represents a positive total angular movement and which may include angular movement greater than 360°. This engagement angle is less than 120°, preferably less than 80°, yet more preferably less than 60°, and most preferably less than 45°. In one embodiment, the engagement angle for any entry point on the chip is from about 1 to about 120, preferably from about 5 to about 80, more preferably from about 10 to about 60, and most preferably from 15 to about 40. If the general curvature of the specific line can be described as a vertical function (y), which is dependent on a horizontal distance (x), then the slope of a tangent at a given point is given by the derivative of that function. One skilled in the art could use this approach to identify the engagement angle.

The entry point tangent is an average tangent line. The average tangent line, as used herein, is defined as the average tangentiallity of that general curvature over a length (tl) of about 3 mm. The length (tl) begins about 1 mm from the entry point to about 4 mm towards $B_{ref}$ as shown in Figure 10a. The average tangentiallity of the general curvature is used to disregard the various thickness of the chip and the shapes of the edge of the chip, since every chip intended for consumption will have a specific thickness, whether variable or constant, throughout its surface. Also, chip edges may be rounded or squared or tapered or otherwise. The intention of the 3 mm length (tl) over which to draw a tangent is to account to a larger degree with curvature that represents the general outer curvature more so than that of the edge, especially if this edge is thicker than 1 mm. Figure 10b shows an expansion of Figure 10a around the entry point, to aid in the understanding of the average tangent area. Also, we specifically want to refer to the smoothed curvature, to disregard bubble effects on the surface of the chip, whether random or intended, and other surface features, like ridges, that extend from the surface by a distance shorter than the equivalent to twice the average shape thickness.

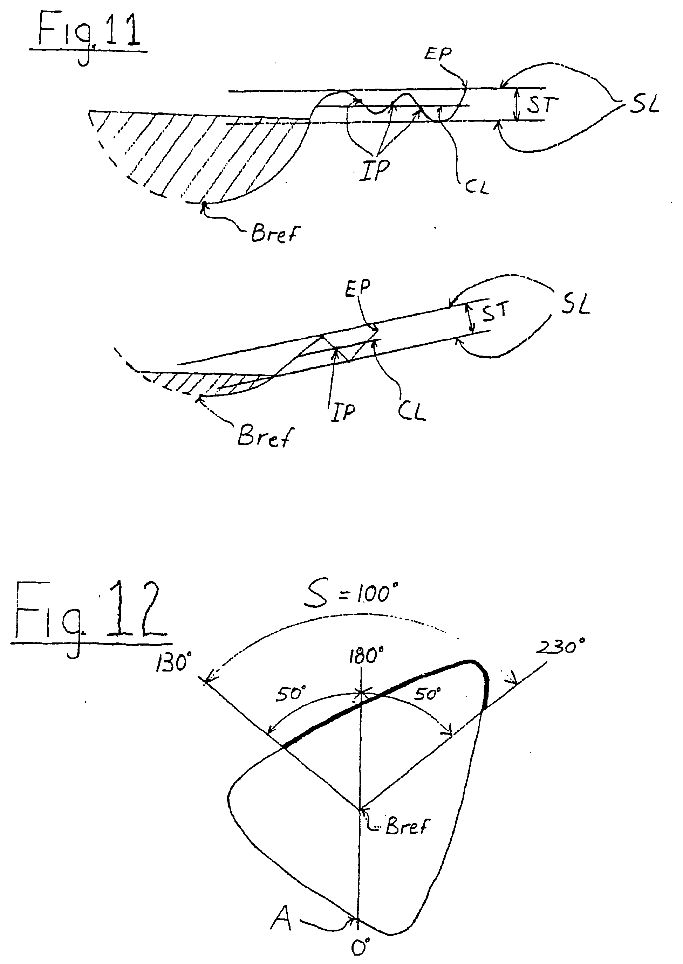

Referring to Figure 11, there may be grip regions adjacent to an entry point that may be wavy, or having at least 1 inflection point that are not within about 3 mm of the containment volume of the reference orientation. These inflection points exist on a line starting from $B_{ref}$ and ending at the given entry point (E) that results from the intersection of the general smoothed curvature of the chip while in the reference orientation with a vertical imaginary plane that contains both the ($B_{ref}$) and the given entry point (E). If this is the case, the waves should be disregarded if the portion of the resulting intersected line that is not within 3 mm of the containment volume of the reference orientation can be sandwiched by two parallel lines SL, "Sandwiching Lines", that are separated a distance ST, "Sandwich Thickness", of less than 15 mm while in the closest possible position to each other.

If this "sandwiching" can occur such that the distance (ST) is less than 15 mm, then a centered line (CL) that is parallel to the sandwiching lines (SL) and located between and equidistant from both would replace the waves for the purpose of identifying the tangent at the entry point. This centered line (CL) will be regarded as the tangent of the entry point. Figure 11 shows two examples of this, where IP refers to inflection points, and EP refers to the entry point. Figure 11 shows the containment volume of the reference orientation shaded. Note that the waves can resemble a sinusoidal curve, or have sharp angles in the peaks and valleys of the waves.

Hold Angle

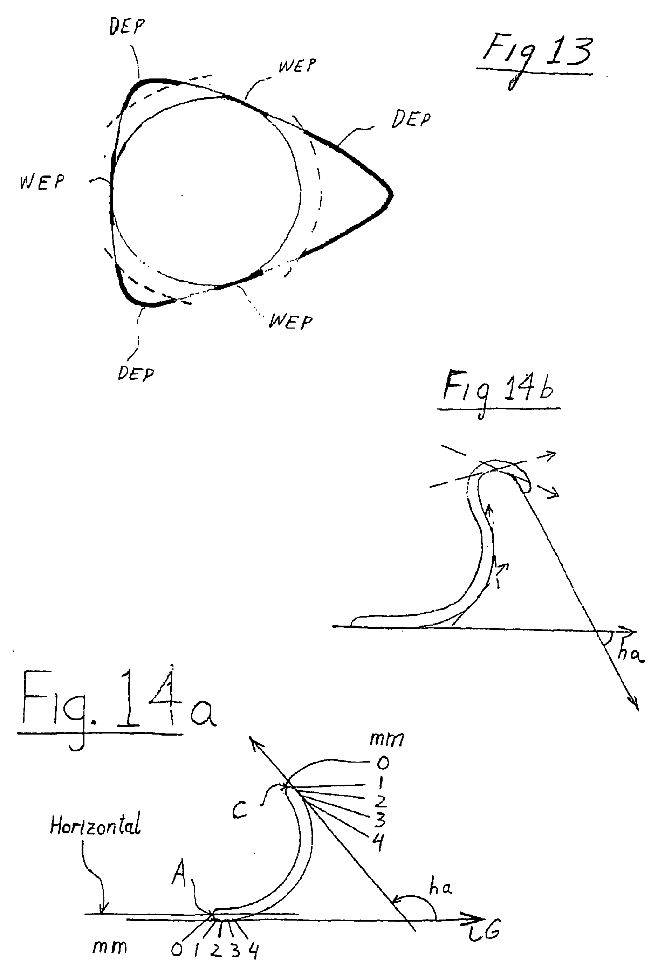

The hold angle ($h_a$) is related to the orientation of the grip regions (14) for a given chip engagement orientation of an entry point (E). Grip regions (14) consist of at least one dry entry point. It will be helpful to further define the concepts of dry entry point and opposite entry point. A dry entry point, as used herein, is defined as any an entry point along the chip that is not contained by the volume of the containment well (12) in the reference orientation. More preferably, the dry entry points are located beyond the perimeter ($P_{cw}$) of the containment well (12) of the reference orientation. This distance is preferably greater than about 5 mm, more preferably greater than about 8 mm, yet more preferably greater than about 11 mm, and most preferably greater than about 14 mm. Opposite dry entry points exist in relation to a given dry entry point. Referring to Figure 12, the direction of a given entry point (A) must be defined as 0° with respect to the point ($B_{ref}$) in the reference orientation. Opposite entry points, as used herein, are defined as all the entry points existing opposite the given entry point (A) along the shaped chip in its reference orientation between about 130° to about 230° from the reference entry point (A). This is a span (S) of preferably about 100°, symmetrical about the 180° vector direction, i.e., 50° on either side of this 180° vector direction. This span (S) is symmetrically opposite to the given entry point (A). An entry point will itself be an opposite entry point to all its opposite entry points. Alternatively, the span (S) can range from about 135° to about 225°, i.e., a span of about 90°, preferably from about 140° to about 220°, i.e., a span of about 80°, more preferably about 145° to about 215°, i.e., a span of about 70°. Dry opposite entry points for a given entry point (A), as used herein, are defined as those entry points that satisfy both the definition for dry entry point and for opposite entry point for a given entry point (A). Referring to Figure 13, a wet entry point (WEP), as used herein, is defined as an entry point along the chip that is at least about 10 mm away from the closest dry entry point (DEP) and within about 2 mm from the containment well (12) of the reference orientation. A transition entry point is defined herein as any entry point that is not a dry entry point or a wet entry point.

Referring to Figures 14a and 14b, there exists a hold angle ($h_a$) for every entry point and each of its corresponding opposite entry points. This means that each entry point will have as many hold angles as opposite entry points, i.e., one hold angle per opposite entry point. The hold angle for a given entry point (A) and one of its opposite entry points (C) can now be defined herein as the total angular movement angle that a tangential line at the entry point (A) has to move to arrive to a tangential position at the opposite entry point (C) as shown in Figure 13a. The total angular movement may be more than 360°. The hold angle ($h_a$) can be positive or negative depending on whether the leading portion of the tangent (G) at the entry point (A) netted out as counter clock-wise or clock-wise movement respectively as it followed the general curvature of the chip towards a tangential position at the opposite entry point (C). In the case of Figure 14a, the hold angle is positive. The tangential line is that of a specific line that results from the intersection of the generally smoothed outer curvature of the chip (opposite surface from the inner surface of the containment well (12)) and a vertical imaginary plane that includes both the given entry point (A) and the opposite entry point (C) while the chip is in the engagement orientation for the given entry point (A). Counter clock-wise or clock-wise rotational movement of the tangent is established while observing the vertical imaginary plane that intersects both points (A) and (C) in such a way that the containment volume rotates to the left around entry point (A), and that the leading portion (G) of the tangent at entry point (A) faces the right as shown in Figure 14a.

The tangential lines at either point A or C are defined in this case as the average tangent of that general curvature over a length, tl, of about 3 mm that begins at about 1 mm from each entry point and runs along the outer surface to about 4 mm for each entry point (A) and each opposite entry point (C) as shown in Figure 14a. In Figure 14a, angle ($h_a$) represents the hold angle. Also, the tangential lines must be contained in the vertical imaginary plane that intersects both points (A) and (C). As noted earlier, every shape intended for consumption will have a specific thickness, whether variable or constant, throughout its surface. Also, shape edges may be rounded or squared or tapered or otherwise. The intention of the 3 mm length (tl) over which to draw a tangent is to account to a larger degree with curvature that represents the general outer curvature more so than that of the edge, especially if this edge is thicker than 1 mm. Also, The curvature is referred to as generally smooth to disregard the effects of bubbles on the surface, whether random or intended, and other surface features, such as ridges, that extend from the surface by a distance shorter than the equivalent to twice the average shape thickness.

Also, the tangential line at point (A) is placed parallel to a horizontal plane. Also, the leading portion (G) of the tangent at the entry point (A) points right as shown in Figure 14a. Figure 14b shows a second chip shape having a negative hold angle ($h_a$) for exemplary purposes. The preferred hold angle is from about -50° to about 150°, more preferably from about -25° to 110°, yet more preferably from about 0° to about 100°, and most preferably from about 25° to about 95°. Note that negative hold angles may result when the general curvature of the shape exhibits both concavity and convexity. Also, all degrees referred to in the above descriptions are in a scale such that 360° span a full circle. This is the case except where noted otherwise that degrees are expressed in radians.

Another feature used herein to describe the relationship between improved dip containment volume and ample area for grip regions is the Dip Improvement Ratio. The Dip Improvement Ratio, as defined herein, is the containment volume of the chip divided by the projected area of the chip. The overall size of the chip provides the capability for hand held control, which enables improved topical dip application. The projected area of the snack directly correlates to the capability to hold the snack comfortably while still providing sufficient dip containment volume. Thus, the greater the projected area of the chip, generally the more surface area available on the chip for gripping it. The projected area, as used herein, is essentially the two-dimensional outline of the shape when the shape is placed in the horizontal plane as shown in Figure 3 wherein the opening of the containment well (12) is facing upward. After placing the chip in this reference orientation, a two dimensional outline of the chip's shape is created via either projecting a light source down from a distance vertically above the chip such that the light can pass the peripheral edge of the chip toward a horizontal surface or tracing this two dimensional outline onto the horizontal surface. The two-dimensional outline or footprint of the chip forms a projected area that can be determined either by area calculations of a known geometry, a curve integrator, super imposing the actual drawn area on grid paper with predetermined area markings, or by comparing the weight of a piece of paper cut to the footprint outline to a weight of similar paper with a known area.

The advantage of the current development provides a larger gripping region, preferably two to four times greater than existing chip shapes, while also providing a substantial dip holding capacity. According to the present invention, the chip's projected area is from 1750 mm$^2$ to 3500 mm$^2$, preferably from 1750 mm$^2$ to 2500 mm$^2$, and most preferably 1900 mm$^2$ to 2400 mm$^2$ and the Dip Improvement Ratio is less than 6.0 mm, preferably less than 4.5 mm, more preferably less than 3.0 mm and most preferably less than 1.0 mm. In an alternative embodiment, the Dip Improvement Ratio is from 1.0 mm to 1.1 mm.

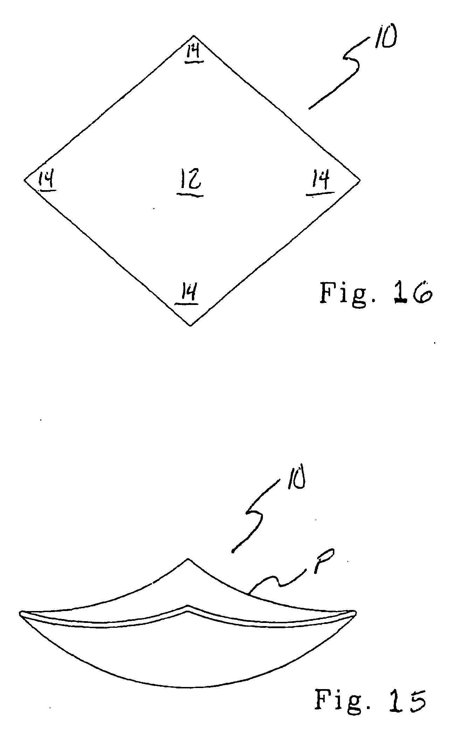

Figures 15 and 16 show a further embodiment of the chip wherein the chip has a diamond shape including containment well (12) formed from a cap section of a sphere. The footprint of a diamond shape provides four points for gripping the chip with fingers. The length of the minor axis of the diamond shape is from about 20 mm to about 80mm, preferably from about 30 mm to about 70mm, more preferably from about 40 mm to about 65mm, and most preferably from about 50 mm to about 65mm. The length of the major axis of the diamond shape is from about 55 mm to about 90 mm, preferably from about 60 mm to about 80mm, and most preferably from about 65 mm to about 75 mm. The diamond can be orthogonal or non-orthogonal shape.

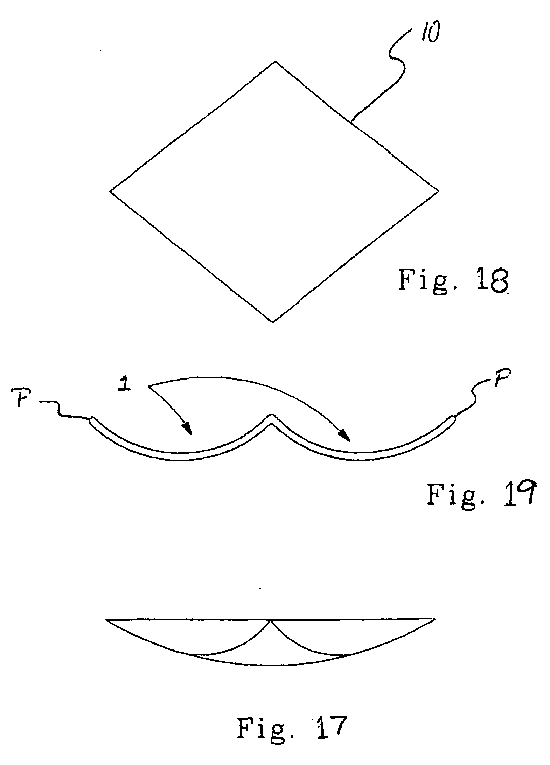

Figures 17 through 19 show still a further shape of interest. The shape is the formation of a diamond-shaped chip (10) that is constructed with two dip containment wells (12), one in each half of the diamond where the shape is preferentially orthogonal. The shape essentially has the footprint of two triangular shapes that are attached along a common axis with each triangle having a dip containment well (12) to make a chip having two dip containment wells (12).

An ideal method for forming the desired chip shapes of the present invention is by frying or baking in a restrained manner. Restrained forming, as used herein, is defined as the forming of the dough piece into the desired shape with at least one mold during the drying process, such as baking or frying. Restrained forming will be described more fully below. Dough pieces are formed into a predetermined size and shape. The chips of the current invention can be formed into a fixed, constant shape by cooking the dough pieces between a pair of constrained molds that hold the dough in its shape until the structure is set. Preferably the chips are prepared by a continuous frying method and are constrained during frying. An apparatus described in US-A-3,626,466 issued to Liepa on December 7, 1971 can be used. The shape of the constrained molds can be modified to deliver the desired shapes of the present development. The dough pieces are first shaped on a movable apertured mold half then held during subsequent cooking by a second apertured mold half. The dough can be baked such as in a convection oven or fried to set the final structure to the desired shape. The shaped constrained pieces are passed through reservoir containing a hot frying medium or through a hot gaseous medium such as heated air or steam until the pieces are cooked to a crisp state with a final moisture content of about 0.5 to about 4% water.

Alternately, the dough could be first cut into the desired shape then constrained by a pair of intermeshing belts wherein the dough piece sits between the belts and takes the shape of the belt contours. Ideally the continuous belts have similar surface contours or shapes in geometrically similar locations such that the belts can come together at close tolerance to hold the dough piece in place. Another variation of the latter process is to have a single belt or mold where the top of the dough piece rests against the bottom of the belt or mold and the bottom of the dough piece either floats by buoyancy to remain in a fixed location or is preferably supported by the convective currents of frying oil directed towards it. The constraining materials for the molds or belts are ideally perforated to allow evaporated moisture from the dough to escape to the frying oil thus maintaining a driving force for mass transfer to continue. The shape of the restrained cooking molds or belts are preferably sections of a sphere, paraboloid or ellipsoid. Once the dough is restrained by the belt(s), the shaped constrained pieces can be either passed through reservoir containing a hot frying medium or through a hot gaseous medium such as heated air. The dough pieces are cooked until the pieces are cooked to a crisp state with final moisture content of about 0.5 to about 4% water. The fat content of the chip should be from about 18% to about 45%, preferably from about 22% to about 32%, more preferably from about 24% to about 30%, and most preferably from about 25% to about 29%. The chip is comprised substantially of corn masa, preferably what is commonly known as a "tortilla" chip.

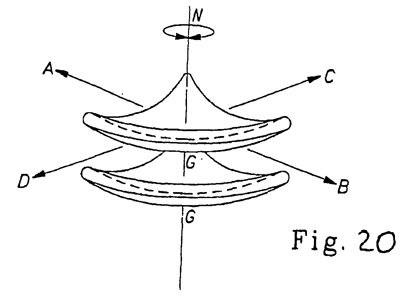

The chip of the present invention may be placed in a nested arrangement or stacked arrangement, wherein each chip is placed within the dip containment well (12) of the previous chip. This arrangement forms a somewhat interlocking relationship between each chip providing the benefits of motion control and increased package density. The term "nested arrangement", as used herein, is defined as snack pieces aligned along a single one-dimensional nesting axis (N) that runs perpendicularly through the face of each snack piece wherein the snack pieces are all facing the same direction so that the pieces can fit within one another. The preferred embodiment of the nested arrangement of a plurality of the chips (10) is shown in Figure 20. The nested arrangement or stack is placed inside a tubular canister, preferably having a cross sectional shape similar to the chips. Further, this package is preferably made of either mono-layer or multiple-layer plastic. The package can be made by any known package making methods, such as injection molding, thermoforming or blow molding, preferably blow molding. The package must also be ergonomically comfortable for the consumer to handle.

## Claims

1. An ergonomically-shaped concave-curved potato or corn chip snack piece provided with improved containment of topical dip-condiments on the surface of said snack piece and easy gripping, said snack piece being a section from a sphere cap having a radius of curvature of from 5 mm to 500 mm and comprising:

   a) a containment well to contain dip-condiments; and
   b) a grip region, said grip region adjacent to said containment well;
   c) wherein said snack has a projected area of from 1750 mm$^2$ to 3500 mm$^2$ and a dip improvement ratio defined as the containment volume of the chip divided by the projected area of the chip of from 0.3 mm to 6 mm whereby said grip region provide the user an area to grab said snack piece without having to place fingers in said dip containment well, and
   d) wherein the chip may be placed in a nested arrangement of snack pieces aligned along a single one-dimensional nesting axis that runs perpendicularly though the face of each snack piece.

2. A snack piece according to claim 1, wherein said grip region includes at least one dry entry point at a distance from said containment well of at least 5 mm.

3. A snack piece according to claim 2, wherein said at least one dry entry point has an engagement angle from 1° to 120°, whereby a user of said snack piece can grab said grip region of said snack piece outside said containment well and cause said snack piece to engage the dip at an advantageous angle such that the dip enters said containment well.

4. A snack piece according to claim 1, wherein said snack piece is substantially triangular-shaped.

5. A snack piece according to claim 4, wherein said snack piece is isosceles.

6. A snack piece according to claim 1, wherein said snack piece has a length (L) from 40 mm to 110 mm and a width (W) from 30 mm to 110 mm.

## Patentansprüche

1. Ergonomisch geformtes, konkav gekrümmtes Kartoffel- oder Maischipsnackstück, das mit verbesserter Einbehaltung von topischen Würzsoßen auf der Oberfläche des Snackstücks und einfachem Anfassen ausgestattet ist, wobei das Snackstück ein Ausschnitt einer Kugelkappe mit einem Krümmungsradius von 5 mm bis 500 mm ist und Folgendes umfasst:

   a) eine Rückhaltemulde zum Einbehalten von Würzsoßen; und
   b) einen Anfassbereich, wobei sich der Anfassbereich neben der Rückhaltemulde befindet;
   c) wobei der Snack eine projizierte Fläche von 1750 mm2 bis 3500 mm2 und ein Soßenverbesserungsverhältnis, definiert als das Rückhaltevolumen des Chips, geteilt durch die projizierte Fläche des Chips, von 0,3 mm bis 0,6 mm aufweist, wodurch der Anfassbereich dem Benutzer eine Fläche zum Anfassen des Snackstücks bietet, ohne die Finger in die Rückhaltemulde geben zu müssen, und
   d) wobei der Chip in eine zusammengepackte Anordnung von Snackstücken gegeben werden kann, die entlang einer einzigen eindimensionalen Anordnungsachse, die senkrecht durch die flächige Seite jedes Snackstücks verläuft, ausgerichtet sind.

2. Snackstück nach Anspruch 1, wobei der Anfassbereich mindestens einen trockenen Eintrittspunkt einschließt, der sich in einem Abstand von mindestens 5 mm von der Rückhaltemulde befindet.

3. Snackstück nach Anspruch 2, wobei der mindestens eine trockene Eintrittspunkt einen Eintauchwinkel von 1 ° bis 120 ° aufweist, wodurch der Benutzer des Snackstücks den Anfassbereich des Snackstück außerhalb der Rückhaltemulde anfassen kann und veranlassen kann, dass das Snackstück in einem vorteilhaften Winkel in die Soße eintaucht, so dass die Soße die Rückhaltemulde betritt.

4. Snackstück nach Anspruch 1, wobei das Snackstück im Wesentlichen dreieckig geformt ist.

5. Snackstück nach Anspruch 4, wobei das Snackstück gleichschenklig ist.

6. Snackstück nach Anspruch 1, wobei das Snackstück eine Länge (L) von 40 mm bis 110 mm und eine Breite (W) von 30 mm bis 110 mm aufweist.

**Revendications**

1. En-cas de type chips de pomme de terre ou de maïs incurvé concave de forme ergonomique pourvu d'une retenue améliorée des sauces condimentaires topiques sur la surface dudit en-cas et d'une préhension aisée, ledit en-cas étant une section provenant d'un couvercle sphérique ayant un rayon de courbure allant de 5 mm à 500 mm et comprenant:

   a) une cavité de retenue pour retenir les sauces condimentaires; et
   b) une région de préhension, ladite région de préhension étant adjacente à ladite cavité de retenue;
   c) où ledit en-cas a une zone projetée allant de 1750 mm$^2$ à 3500 mm$^2$ et un rapport d'amélioration du trempage défini en tant que volume de retenue de la chips divisé par la zone projetée de la chips allant de 0,3 mm à 6 mm selon lequel ladite région de préhension fournit à l'utilisateur une zone pour saisir ledit en-cas sans avoir à placer les doigts dans ladite cavité de retenue, et
   d) où la chips peut être placée dans un agencement imbriqué d'en-cas alignés le long d'un seul axe d'imbrication monodimensionnel qui s'étend perpendiculairement à travers la face de chaque en-cas.

2. En-cas selon la revendication 1, dans lequel ladite région de préhension inclut au moins un point d'entrée sec à une distance de ladite cavité de retenue d'au moins 5 mm.

3. En-cas selon la revendication 2, dans lequel au moins un point d'entrée sec a un angle d'engagement allant de 1° à 120°, selon lequel un utilisateur dudit en-cas peut saisir ladite région de préhension dudit en-cas à l'extérieur de ladite cavité de retenue et peut entraîner ledit en-cas à engager le trempage à un angle avantageux de sorte que le trempage entre dans ladite cavité de retenue.

4. En-cas selon la revendication 1, où ledit en-cas est de forme sensiblement triangulaire.

5. En-cas selon la revendication 4, où ledit en-cas est isocèle.

6. En-cas selon la revendication 1, où ledit en-cas a une longueur (L) de 40 mm à 110 mm et une largeur (1) de 30 mm à 110 mm.

Fig 1

$P_S = P_{Cw}$

Fig. 5

Fig. 3

Fig. 4

Fig. 2

Fig. 6b

Fig. 6a

Fig. 7

Fig. 8

Fig. 9

Fig. 10a

Fig. 10b

Fig.11

Fig.12

DEP

WEP

DEP

WEP

WEP

DEP

Fig 13

Fig 14b

ha

Fig. 14a

Horizontal

C

mm
0
1
2
3
4

A

ha

LG

mm
0 1 2 3 4

14

10

12

14

14

14

Fig. 16

10

P

Fig. 15

10

Fig. 18

P ~ 1 P

Fig. 19

Fig. 17

Fig. 20